# EUROPÄISCHE PATENTSCHRIFT

(11) **EP 0 402 747 B1**
(45) Veröffentlichungstag und Bekanntmachung des Hinweises auf die Patenterteilung: **07.04.1993**
(21) Anmeldenummer: 90110658.3
(22) Anmeldetag: 06.06.1990
(51) Int. Cl.: F24D 10/00, F16L 55/26, F16L 9/18

(54) **Fernwärmeleitung**
District heating pipe
Tuyauterie de chauffage urbain

(30) Priorität: 15.06.1989 DE 3919522
(43) Veröffentlichungstag der Anmeldung: 19.12.1990
(73) Patentinhaber: DSD - Dillinger Stahlbau GmbH, D-66740 Saarlouis (DE)
(72) Erfinder: Nadé, André, F-57320 Bouzonville (FR)
(74) Vertreter: Bernhardt, Winfrid, Dr.-Ing.

(56) Entgegenhaltungen:
- DE-A- 3 213 821
- DE-B- 1 295 927
- DE-U- 1 883 633
- DE-U- 7 017 699

## Beschreibung

Die Erfindung betrifft eine Fernwärmeleitung mit einem das Wärmeübertragungsmedium führenden Innenrohr und einem dieses mit einem Abstand umgebenden Mantelrohr und mit Vakuum in dem Ringraum zwischen Innenrohr und Mantelrohr, wobei an mindestens einer Stelle der Fernwärmeleitung der Ringraum geschottet ist und das Schott durch eine Leitung überbrückt ist, die durch ein Ventil verschließbar ist.

Eine solche Fernwärmeleitung ist aus dem DE-U- 70 17 699 bekannt. Die überbrückende Leitung ist unten an das Mantelrohr angesetzt und das genannte Ventil ist ein Schwimmerventil, das bei Wassereinbruch in den Ringraum schließt und dann auch auf derjenigen Seite des Schotts, wo die Rohrleitung nicht beschädigt ist, das noch vorhandene Vakuum hält.

Aus dem DE-U- 18 83 633 ist eine Pipeline bekannt mit einem zur Überwachung auf der Außenseite des Rohres angebrachten Wandbelag. Der Wandbelag besteht aus aneinandergeschweißten Kunststoffplatten, an deren Unterseite Rillen ausgebildet sind derart, daß sie ein zusammenhängendes Hohlraumsystem entstehen lassen. Durch dichtend um das Rohr gelegte Manschetten ist dieses Hohlraumsystem jedoch entlang der Rohrleitung in Teillängen unterteilt. In jede der Teillängen führt von einer Vakuumpumpe aus eine sich verzweigende Saugleitung. Tritt in der Pipeline ein Leck auf, so schließt dort ein in der betreffenden Saugleitung angeordnetes Rückschlagventil. Es schließt zugleich einen Kontakt, der das Leck an eine Zentralstelle meldet.

Der Erfindung liegt die Aufgabe zugrunde, den im Falle eines Lecks des Innenrohrs oder des Außenrohrs einer Fernwärmeleitung entstehenden Schaden mit größerer Sicherheit als bisher zu begrenzen.

Gemäß der Erfindung ist zu diesem Zweck eine Anordnung der eingangs bezeichneten Art vorgesehen, bei der als das Ventil ein von einem auf Druck in dem Ringraum ansprechenden Druckschalter gesteuertes, motorisch bestätigtes Ventil eingesetzt ist und in den voneinander abgeschotteten Ringraumabschnitten jeweils an oder nahe der tiefsten Stelle des Abschnittes an der Unterseite des Mantelrohres ein Stutzen mit einem Feuchtigkeitsmesser angeordnet ist, der gleichfalls das Ventil steuert.

Anders als bei der obengenannten Lösung, wo die Vakuumabdichtun nur als Folge von und zusammen mit einer Wasserabdichtung zustandekommt, erfolgt hier die Vakuumabdichtung primär und auch nur für sich, führt sie aber dennoch auch zu einer WAsserabdichtung dadurch, daß, jedenfalls bei einem Leck des Innenrohres, das Wärmeübertragungsmedium sofort verdampft und damit den Druck erhöht. Darüber hinaus ist für den Fall des Eindringens von Feuchtigkeit insbesondere für einen stärkeren Wassereintritt,eigens Vorsorge getroffen mit der Schließung des Ventils durch den Feuchtigkeitsmesser.

Das Schließen des Ventils begrenzt den weiteren Druckanstieg und/oder Wassereintritt auf den von dem Leck betroffenen Abschnitt der Fernwärmeleitung. Bis und während dieser repariert wird, bleibt der übrige Abschnitt bzw. bleiben die übrigen Abschnitte einigermaßen intakt.

Je nach den Gegebenenheiten wird man in der Fernwärmeleitung Schotte dieser Art in Abständen von 300 bis 800 m, vorzugsweise 500 bis 600 m, anordnen und bei der üblichen Erdverlegung der Fernwärmeleitungen dafür Schächte anlegen.

Um die Anlage möglichst früh reagieren zu lassen, wird man den Schaltdruck niedrig wählen, vorzugsweise unter 20 mb.

Zweckmäßigerweise setzt man den Druckschalter ebenso wie das Ventil an die überbrückende Leitung und darüber hinaus ein Druckmeßgerät, ferner ein Handventil.

In vorteilhafter weiterer Ausgestaltung der Erfindung ist für mindestens einen Teil der genannten Meß- und Steuergeräte mindestens eines Teils der Schotte - vorzugsweise für alle Meß- und Steuergeräte aller Schotte - der Fernwärmeleitung eine Fernanzeige in einer Zentrale vorgesehen, für die Ventile vorzugsweise ferner eine Fernsteuerung.
Damit sind ein sofortiger Überblick und ein schnelles Beheben des Schadens möglich. Man erkennt am weiteren Ansteigen des Druckes den Abschnitt der Fernwärmeleitung, in dem das Leck aufgetreten ist, und braucht nicht von Schacht zu Schacht zu suchen. Man kann die Schotte zwischen den intakten Abschnitten schnell wieder öffnen und kann von den beiden Enden der Fernwärmeleitung her wieder evakuieren.

Alles dies gilt sowohl für Lecks im Mantelrohr als auch für solche im Innenrohr.

Der Feuchtigkeitsmesser, besonders in der Verbindung mit der zentralen Fernanzeige, läßt schnell auch einen Feuchtigkeitsschaden erkennen, und die mit ihm verbundene Steuerung des Ventils bedeutet eine Sicherung für den Fall eines stärkeren Wassereinbruchs, bei dem ggf. der Feuchtigkeitsmesser schneller anspricht als die Verdampfung auf den Druckschalter wirken kann. Es versteht sich, daß man die tiefste Stelle des Abschnittes an einem der beiden den Abschnitt begrenzenden Schotte einrichten wird und daß nicht nur dort das Ventil der überbrückenden Leitung von dem Feuchtigkeitsmesser gesteuert ist, sondern auch am anderen Ende des Abschnittes.

Das Schott besteht vorzugsweise aus einem an dem Innenrohr angeordneten Außenflansch und einem an dem Außenrohr angeordneten Innenflansch und einem zwischen diesen beiden Flanschen angeordneten Kompensator.

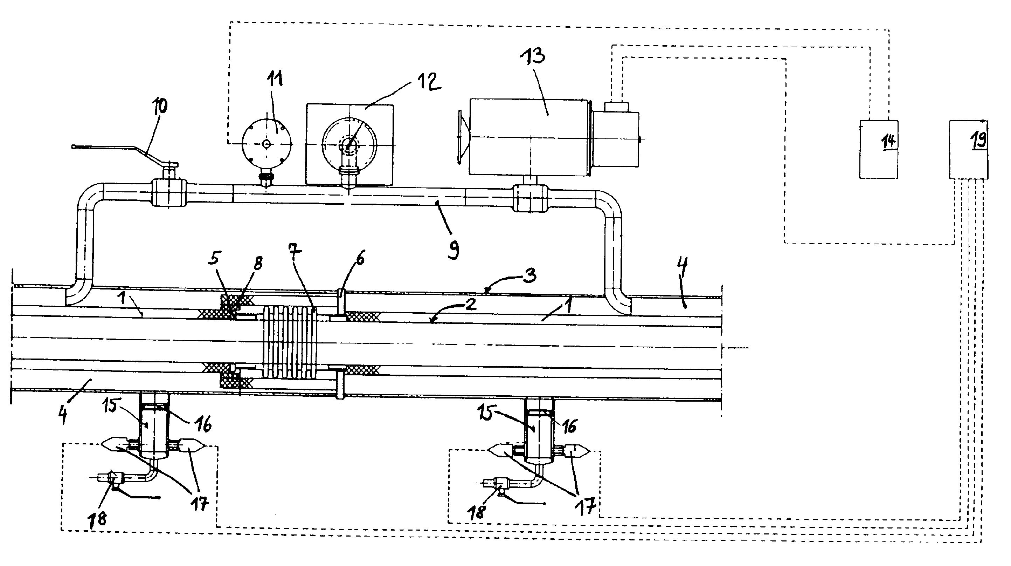

Die Zeichnung gibt ein Ausführungsbeispiel der Erfindung wieder. Sie zeigt einen in einem nicht gezeichneten Schacht liegenden Ausschnitt aus einer Fernwärmeleitung.

Ein mit einer Wärmeisolation 1 versehenes Innenrohr 2 ist mit Abstand von einem Mantelrohr 3 umgeben. Der freie Ringraum zwischen Innenrohr und Mantelrohr ist mit 4 bezeichnet.

Auf dem, in dem gezeichneten Ausschnitt ununterbrochenen, Innenrohr 2 ist ein Außenflansch 5 angeordnet. Von dem Mantelrohr 3 ragt in den Ringraum 4 ein Innenflansch 6. Zwischen dem Außenflansch 5 und dem Innenflansch 6 erstreckt sich ein Kompensator 7.
Diese Anordnung bildet ein Schott in dem Ringraum 4. Sie ist mit einer Wärmeisolation 8 umhüllt, die hier die Wärmeisolation 1 ersetzt.

Das Schott 5-7 ist überbrückt durch eine Leitung 9, die über dem Innenrohr aus dem Ringraum 4 abzweigt.

An der Leitung 9 sind ein Handventil 10, ein Druckschalter 11, ein Druckmesser 12 und ein Motorventil 13 angeordnet.

Der Druckschalter 11 steuert über einen Schaltverstärker 14 das Motorventil 13.

An der Unterseite des Mantelrohrs 3 sind beiderseits des Schotts 5-7 zwei mit dem Ringraum 4 verbundene Stutzen 15 angesetzt. Die Stutzen 15 weisen jeweils unter einem schützenden Filter 16 einen, wegen kathodischen Schutzes der Fernwärmeleitung doppelten, Feuchtigkeitsmesser 17 auf sowie ein Handventil 18 zum Auslassen eventuell in den Ringraum 4 eingedrungenen Wassers. Auch die Feuchtigkeitsmesser 17 können, über einen Schaltverstärker 19, das Motorventil 13 schließen.

Bedeutung und Funktion der beschriebenen Einrichtungen gehen aus den weiter oben gegebenen Erläuterungen hervor.

## Patentansprüche

1. Fernwärmeleitung mit einem das Wärmeübertragungsmedium führenden Innenrohr (2) und einem dieses mit einem Abstand umgebenden Mantelrohr (3) und mit Vakuum in dem Ringraum (4) zwischen Innenrohr (2) und Mantelrohr (3), wobei an mindestens einer Stelle der Fernwärmeleitung der Ringraum (4) geschottet (5-7) ist und das Schott (5-7) durch eine Leitung (9) überbrückt ist, die durch ein Ventil (13) verschließbar ist,
dadurch gekennzeichnet,
daß als Ventil ein von einem auf Druck in dem Ringraum (4) ansprechenden Druckschalter (11) gesteuertes, motorisch betätigtes Ventil eingesetzt ist und daß in den voneinander abgeschotteten Ringraumabschnitten jeweils an oder nahe der tiefsten Stelle des Abschnittes an der Unterseite des Mantelrohres (3) ein Stutzen (15) mit einem Feuchtigkeitsmesser (17) angeordnet ist, der gleichfalls das Ventil (13) steuert.

2. Fernwärmeleitung nach Anspruch 1,
dadurch gekennzeichnet,
daß das Schott (5-7) aus einem an dem Innenrohr (2) angeordneten Außenflansch (5) und einem an dem Außenrohr (3) angeordneten Innenflansch (6) und einem zwischen diesen beiden Flanschen angeordneten Kompensator (7) besteht.

3. Fernwärmeleitung nach Anspruch 1 oder 2,
dadurch gekennzeichnet,
daß der Druckschalter (11) gleichfalls an der überbrückenden Leitung (9) angeordnet ist.

4. Fernwärmeleitung nach einem der Ansprüche 1 bis 3,
dadurch gekennzeichnet,
daß in der überbrückenden Leitung (9) ferner ein Druckmeßgerät (12) und/oder ein Handventil (10) angeordnet sind.

5. Fernwärmeleitung nach einem der Ansprüche 1 bis 4,
dadurch gekennzeichnet,
daß die überbrückende Leitung (9) oben an das Mantelrohr (3) angesetzt ist.

6. Fernwärmeleitung nach einem der Ansprüche 1 bis 5,
dadurch gekennzeichnet,
daß das Schott (5-7) und die überbrückende Leitung (9) sowie ggf. die genannten Stutzen (15) in einem Schacht angeordnet sind.

7. Fernwärmeleitung nach einem der Ansprüche 1 bis 6,
dadurch gekennzeichnet,
daß für mindestens einen Teil der genannten Meß- und Steuergeräte (11;12;17) mindestens eines Teils der Schotte der Fernwärmeleitung eine Fernanzeige in einer Zentrale vorgesehen ist, für die Ventile vorzugsweise ferner eine Fernsteuerung.

8. Fernwärmeleitung nach einem der Ansprüche 1 bis 7,
dadurch gekennzeichnet,
daß sie Schotte der genannten Art in Abständen von 300 bis 800 m, vorzugsweise 500 bis 600 m, aufweist.

9. Fernwärmeleitung nach einem der Ansprüche 1 bis 8,
dadurch gekennzeichnet,
daß der Druckschalter (11) einen Schaltdruck von höchstens 40 mb, vorzugsweise unter 20 mb, hat.

## Claims

1. District heating pipe with an internal tube (2) carrying the heat transfer medium and a jacket tube (3) surrounding this at a distance, with a vacuum inside the annular space (4) between the internal tube (2) and the jacket tube (3), whereby the annular space (4) has a bulkhead (5-7) at least at one point in the district heating pipe, and the bulkhead (5-7) is bridged by a pipe (9) capable of being closed by means of a valve (13),
characterized in that
a motorized valve controlled by a pressure switch (11) actuated by the pressure inside the annular space (4) is used as the valve, and in that a socket (15) with a moisture meter (17), which also controls the valve (13), is arranged in the sections of annular space which are separated from one another by bulkheads, in each case at or close to the lowest point of the section on the underside of the jacket tube (3).

2. District heating pipe according to Claim 1,
characterized in that
the bulkhead (5-7) consists of an external flange (5) arranged on the internal tube (2) and an internal flange (6) arranged on the external tube (3) and a compensator (7) arranged between these two flanges.

3. District heating pipe according to Claim 1 or 2,
characterized in that
the pressure switch (11) is likewise arranged on the bridging pipe (9).

4. District heating pipe according to one of the Claims 1 to 3,
characterized in that
a pressure measuring device (12) and/or a manual valve (10) are also arranged in the bridging pipe (9).

5. District heating pipe according to one of the Claims 1 to 4,
characterized in that
the bridging pipe (9) is joined to the jacket pipe (3) at the top.

6. District heating pipe according to one of the Claims 1 to 5,
characterized in that
the bulkhead (5-7) and the bridging pipe (9) and, if appropriate, the aforementioned socket (15) are arranged inside a shaft.

7. District heating pipe according to one of the Claims 1 to 6,
characterized in that
a remote indicator is provided at a central control point for at least one part of the aforementioned measurement and control devices (11;12;17) of at least one part of the bulkhead of the district heating pipe and preferably also a means of remote control for the valves.

8. District heating pipe according to one of the Claims 1 to 7,
characterized in that
it exhibits bulkheads of the aforementioned kind at distances of 300 to 800 mm, and preferably 500 to 600 mm.

9. District heating pipe according to one of the Claims 1 to 8,
characterized in that
the pressure switch (11) has a switching pressure of not more than 40 mb, and preferably less than 20 mb.

## Revendications

1. Tuyauterie de chauffage urbain qui comprend un tube intérieur (2) parcouru par le milieu de transmission de la chaleur et un tube d'enveloppe (3) qui entoure le premier à une certaine distance, le vide étant réalisé dans l'espace annulaire (4) compris entre le tube intérieur (2) et le tube d'enveloppe (3), et dans laquelle l'espace annulaire (4) comporte une séparation (5-7) à un emplacement au moins de la tuyauterie de chauffage urbain, le dispositif de séparation (5-7) étant doublé par un conduit de déviation (9) qui peut être formé par une soupape (13), caractérisée en ce que cette soupape est une soupape mise en action par un moteur et commandée par un interrupteur à pression (11) réagissent à la pression régnant dans l'espace annulaire (4) et en ce que chacune des parties d'espace annulaire séparées les unes des autres comporte, au niveau ou à proximité de l'emplacement le plus bas de cette partie, dans le côté inférieur du tube d'enveloppe (3), une tubulure (15) comportant un hygromètre (17) qui commande également la soupape.

2. Tuyauterie de chauffage urbain selon la revendication 1, caractérisée en ce que le dispositif de séparation (5-7) est constitué par une bride extérieure (5) qui se trouve sur le tube intérieur (2) et par une bride intérieure (6) qui se trouve sur le tube extérieur (3) et par un compensateur (7) monté entre ces deux brides.

3. Tuyauterie de chauffage urbain selon l'une des revendications 1 ou 2, caractérisée en ce que l'interrupteur à pression (11) est également monté dans le conduit de déviation (9).

4. Tuyauterie de chauffage urbain selon une des revendications 1 à 3, caractérisée en ce que le conduit de déviation (9) comporte également un manomètre (12) et/ou une soupape (10) à commande manuelle.

5. Tuyauterie de chauffage urbain selon une des revendications 1 à 4, caractérisée en ce que le conduit de déviation (9) est montée à la partie supérieure du tube d'enveloppe (3).

6. Tuyauterie de chauffage urbain selon une des revendications 1 à 5, caractérisée en ce que le dispositif de séparation (5-7) et le conduit de déviation (9) ainsi qu'éventuellement les tubulures mentionnées (15) sont montés dans un puits.

7. Tuyauterie de chauffage urbain selon une des revendications 1 à 6, caractérisée en ce qu'à une partie au moins des appareils (11,12,17) de mesure et de commande d'une partie au moins des dispositifs de séparation de la tuyauterie de chauffage urbain est associé un dispositif de téléaffichage dans un poste central et qu'aux soupapes est associé de préférence un dispositif de télécommande.

8. Tuyauterie de chauffage urbain selon une des revendications 1 à 7, caractérisée en ce que les dispositifs de séparation dècrits qu'elle contient sont à des distances de 300 à 800 m, de préférence de 500 à 600 m.

9. Tuyauterie de chauffage urbain selon une des revendications 1 à 8, caractérisée en ce que l'interrupteur à pression (11) a une pression d'enclenchement de 40 mb au maximum, de préférence inférieure à 20 mb.
